# EUROPÄISCHE PATENTSCHRIFT

(11) **EP 1 318 126 B1**
(45) Veröffentlichungstag und Bekanntmachung des Hinweises auf die Patenterteilung: **01.09.2004**
(21) Anmeldenummer: 02027196.1
(22) Anmeldetag: 05.12.2002
(51) Int. Cl.: C05C 9/02, C05C 9/00, C05C 13/00

(54) **Stickstoffhaltiges Langzeitdüngemittel**
Nitrogen containing long-term release fertilizer
Engrais à libération prolongé contenant de l'azote

(30) Priorität: 07.12.2001 DE 10160330
(43) Veröffentlichungstag der Anmeldung: 11.06.2003
(73) Patentinhaber: COMPO Gesellschaft mbH & Co. KG, 48157 Münster (DE)
(72) Erfinder: Horchler, Klaus, Dr., 67117 Limburgerhof (DE); Wissemeier, Alexander, Prof.Dr., 67346 Speyer (DE); Hähndel, Reinhard, Dr., 67117 Limburgerhof (DE); Czikkely, Vilmos, Dr., 68167 Mannheim (DE); Weigelt, Wolfgang, 67373 Dudenhofen (DE); Zerulla, Wolfram, Dr., 67487 St. Martin (DE)
(74) Vertreter: Filbry, Eberhard

(56) Entgegenhaltungen:
- US-A- 3 061 423
- DATABASE WPI Section Ch, Derwent Publications Ltd., London, GB; Class C04, AN 1970-14492R XP002235863 & JP 45 005420 B (UBE IND LTD)
- DATABASE WPI Section Ch, Week 200048 Derwent Publications Ltd., London, GB; Class C04, AN 2000-527632 XP002235864 & JP 2000 178090 A (MITSUI CHEM INC), 27. Juni 2000 (2000-06-27)

## Beschreibung

Die Erfindung betrifft stickstoffhaltige Langzeitdüngemittel, Verfahren zu ihrer Herstellung und ihre Verwendung.

Düngemittel mit Langzeitwirkung haben gegenüber konventionellen mineralischen oder organischen Düngemitteln viele Vorteile. Sie bieten eine bedarfsgerechtere Anlieferung der Nährstoffe an die Pflanze und verbessern dadurch die Nährstoffausnutzung. Dies führt zu einer Verringerung von Nährstoffvertusten, wodurch die Umweltbelastung reduziert und die Effizienz der Düngung gesteigert wird. Außerdem erlauben sie es, Arbeitsgänge und Betriebsmittel und somit agrarwirtschaftliche Kosten einzusparen.

Eine Langzeitwirkung von Düngemitteln kann auf unterschiedlichen Wegen erreicht werden. Eine Möglichkeit ist es, in Wasser leichtlösliche granulierte Düngemittel mit einer wasserunlöslichen Hülle zu umgeben. Die Nährstofffreisetzung aus solchen umhüllten Düngemitteln erfolgt verzögert, da die Nährstoffe erst durch die Hüllschicht hindurch diffundieren müssen bevor sie von den Wurzeln aufgenommen werden können. Eine andere Möglichkeit besteht darin, die Nährstoffe in Form von chemischen Verbindungen auszubringen, in der sie zunächst nicht pflanzenverfügbar sind. Erst nach Ablauf eines vorgelagerten Freisetzungsschrittes, z.B. einer chemischen Hydrolyse, einer enzymatischen Spaltung und/oder einer mikrobiellen Umsetzung, liegen die Nährstoffe in einer für die Pflanzen verwertbaren Form vor. Derartige Düngemittel werden auch als chemische Langzeitdünger bezeichnet.

Die Idee der chemischen Langzeitdünger stammt bereits aus dem vorigen Jahrhundert. Damals regten Liebig in Deutschland und Murray in England an, Nährstoffe in Form schwerlöslicher Salze für die Pflanzenernährung einzusetzen, siehe auch Ullmann's Encyclopedia of Industrial Chemistry 1987, Vol. A 10, S. 363 ff. Das erste Patent über einen Langzeitdünger mit geringer Löslichkeit auf Basis Harnstoff und Formaldehyd wurde 1924 von der IG Farben, heute BASF, angemeldet (DRP 431585). Die kommerzielle Produktion begann in den fünfziger Jahren in den USA durch die Firmen DuPont und Nitroform Corp.

Heute werden eine ganze Reihe von stickstoffhaltigen Substanzen hergestellt und als Langzeitdünger vermarktet. Die drei mit Abstand wichtigsten sind dabei die Kondensationsprodukte aus Harnstoff und Formaldehyd, Isobutyraldehyd bzw. Acetaldehyd, die als Methylenharnstoff, Isobutylidendiharnstoff (IBDU) und Crotonylidendiharnstoff (CDU) bezeichnet werden.

Weltweit wurden im Düngejahr 1995/1996 etwa 317.000 t derartiger Langzeitdünger produziert, davon 225.000 t Methylenharnstoffe, 82.000 t IBDU und CDU enthaltende Düngemittel sowie ca. 10.000 t Düngemittel mit sonstigen Verbindungen.

Unter den in kleinerem Maßstab hergestellten Substanzen finden sich sowohl cyclische als auch nichtcyclische Strukturen. Zu nennen sind hier Oxamid, Acetylendiharnstoff, Melamin, substituierte Triazone, Ethylendiharnstoff und Triuret.
Eine Beschreibung der Verwendung von Acetylendiharnstoff als Langzeitdüngemittel in Form von NPK-Düngemitteln ist in US 3,061,423 offenbart. Ein Gemisch aus Acetylenharnstoff und 2-oxo-4-methyl-6-ureid-hexahydropyrimidine wird in DW-1970-14492R als Langzeitdünger beschrieben.

Die bekannten Stickstoff-Langzeitdünger unterscheiden sich zum Teil stark in ihrer jeweiligen Wirkungsdauer. Während bei Substanzen mit einer kürzeren Wirkungsdauer die Wirkung relativ rasch nachlässt, zeigen sich bei einer alleinigen N-Düngung mit Verbindungen mit längerer Wirkungsdauer häufig Stickstoffmangelsymptome am Anfang der Kulturzeit, da die Mineralisation aus diesen Materialien heraus oft erst verzögert einsetzt. Außerdem sind nicht alle diese Verbindungen uneingeschränkt pflanzenverträglich, sondern führen in Abhängigkeit von der Aufwandmenge und der gedüngten Kultur zu Pflanzenschäden.

Aufgabe der vorliegenden Erfindung war es daher, Düngemittelzubereitungen bereitzustellen, die als N-Langzeitdünger geeignet und den bekannten Substanzen, vorzugsweise im Bereich Pflanzenverträglichkeit, Wirkungsdauer und Gleichmäßigkeit der Nährstoffanlieferung, überlegen sind.

Die Aufgabe wird erfindungsgemäß gelöst durch ein stickstoffhaltiges Langzeitdüngemittel, enthaltend ein Gemisch aus Acetylendiharnstoff und mindestens einem weiteren organischen stickstoffhaltigen Düngemittel.

Es wurde erfindungsgemäß gefunden, dass sich die Wirkung von Acetylendihamstoff mit weiteren organischen stickstoffhaltigen Düngemitteln nicht nur additiv aus den Eigenschaftsprofilen der Einzelkomponenten ableitet, sondern dass sich darüber hinaus synergistische Effekte zeigen, die zu einer unerwartet starken und lang anhaltenden Unterstützung des Pflanzenwachstums führen.

Das mindestens eine weitere organische stickstoffhaltige Düngemittel kann aus allen bekannten geeigneten derartigen Düngemitteln ausgewählt sein. Vorzugsweise ist das mindestens eine weitere organische stickstoffhaltige Düngemittel ausgewählt aus Methylenharnstoff, Isobutylidendiharnstoff, Crotonylidendiharnstoff, substituierten Triazonen, Triuret oder Gemischen davon.

Besonders bevorzugt ist das mindestens eine weitere organische stickstoffhaltige Düngemittel Isobutylidendiharnstoff.

Derartige organische stickstoffhaltige Düngemittel sind beispielsweise von Scotts, Agra, BASF, Vigoro und Chisso erhältlich.

Für eine nähere Beschreibung von Oxamid kann auf EP-0 578 240 A2, für Acetylendiharnstoff auf US 3,061,423, für substituierte Triazone auf US 4,778,510 und für Triuret auf Hay, J.T., Hewson, W.B., J. Agr. Food. Chem. 1973, 21, 498-9 verwiesen werden.

Acetylendiharnstoff und weitere organische stickstoffhaltige Düngemittel liegen vorzugsweise in einem Gewichtsverhältnis von 1:9 bis 9:1, besonders bevorzugt 1:3 bis 3:1, insbesondere 3:2 bis 2:3 vor.

Die erfindungsgemäßen Langzeitdüngemittel können außerdem weitere Bestandteile enthalten, wie sie üblicherweise in Einzel- und Mehrnährstoffdüngemitteln vorkommen. Beispielsweise können sie zusätzlich Harnstoff oder Stickstoff, Kalium, Phosphor und/oder Magnesium in Form anorganischer Salze, oder Gemische davon, enthalten. Leicht lösliche Stickstoffkomponenten sind beispielsweise Ammoniumnitrat, Ammoniumsulfat oder Harnstoff. Weitere einsetzbare Salze sind beispielsweise MAP, DAP, Kaliumsulfat, Kaliumchlorid, Magnesiumsulfat. Diese zusätzlichen Bestandteile können neben den erfindungsgemäßen Gemischen Hauptbestandteile der Langzeitdüngemittel sein. Femer können neben den Hauptbestandteilen noch Sekundärnährstoffe vorliegen. Beispielsweise können Sekundärnährstoffelemente ausgewählt sein aus Ca, S und B. Es können auch Spurenelemente, ausgewählt aus Fe, Mn, Cu, Zn, Mo oder Gemische davon in Form anorganischer Salze vorliegen. Geeignete Mengen für die Sekundärnährstoffe oder Spurenelemente sind Mengen von 0,5 bis 5 Gew.-%, bezogen auf das gesamte Langzeitdüngemittel. Weitere mögliche Inhaltsstoffe sind Pflanzenschutzmittel wie Insektizide oder Fungizide, Wachstumsregulatoren, Nitrifikationsinhibitoren oder Gemische davon.

Weitere mögliche Inhaltsstoffe der erfindungsgemäßen Düngemittel sind beschrieben in Ullmann's Encyclopedia of Industrial Chemistry, 5. Auflage, 1987, Band A10, Seiten 363 bis 401, DE-A-41 28 828, DE-A-19 05 834, DE-A-196 31 764.

Die erfindungsgemäßen Langzeitdüngemittel können auch ganz oder teilweise beschichtet sein, wie es in EP-A-0 877 722 oder DE-A-196 31 764 beschrieben ist.

Die erfindungsgemäßen stickstoffhaltigen Langzeitdüngemittel können als weitere übliche Düngerkomponenten beispielsweise Einzel- als auch Mehrnährstoffdünger enthalten, die einzeln oder gegebenenfalls in Kombination Nährstoffe wie Stickstoff, Kali oder Phosphor in Form ihrer Salze enthalten. Beispiele hierfür sind NP-, NK-, PK- sowie NPK-Düngemittel wie Kalkammonsalpeter, Ammonsulfat, Ammonsulfatsalpeter oder Harnstoff.

Die erfindungsgemäßen Langzeitdüngemittel können nach allgemein bekannten Verfahren erhalten werden. Sie können beispielsweise durch Vermischen von Pulvern oder Granalien bzw. Granulaten der Ausgangsverbindungen und gegebenenfalls nachfolgendes Granulieren hergestellt werden. Die Herstellung von Düngemittel-Granulaten ist beispielsweise in Ullmann's Encyclopedia of Industrial Chemistry, 5. Auflage, 1987, Band A10, Seite 374 bis 385 beschrieben.

Die erfindungsgemäßen stickstoffhaltigen Langzeitdüngemittel können zur Düngung einer Vielzahl von Pflanzen bzw. Böden eingesetzt werden. Bevorzugt werden die Langzeitdüngemittel zur Düngung von gärtnerischen oder landwirtschaftlichen Kulturen, insbesondere Rasen oder Zierpflanzen, verwendet. Sie werden dabei üblicherweise nach den allgemein bekannten Verfahren auf landwirtschaftlich oder gärtnerisch genutzte Flächen aufgebracht, siehe auch Ullmann's Encyclopedia of Industrial Chemistry, 5. Auflage, 1987, Band A10, Seiten 398 bis 401. Wegen ihrer hohen Pflanzenverträglichkeit eignen sich die erfindungsgemäßen Langzeitdüngemittel nicht nur für Düngeverfahren, bei denen der Dünger annähernd gleichmäßig auf die Agrarfläche verteilt wird, sondern auch für die gezielte Ablage in der Nähe der Pflanzenwurzel.

Die erfindungsgemäßen Langzeitdüngemittel können grundsätzlich in allen Bereichen des Pflanzenbaus wie der Landwirtschaft und des Gartenbaus eingesetzt werden, beispielsweise im Obst- und Gemüseanbau.

Beispiele geeigneter Kulturen sind Zierpflanzen, Rasen sowie Verzehrskulturen wie Apfel, Birne, Erdbeere, Tomate, Paprika und andere.

Die erfindungsgemäßen Langzeitdüngemittel zeichnen sich dadurch aus, dass sie eine besonders wirtschaftliche intensive Nutzung von landwirtschaftlich und gärtnerisch genutzten Flächen ermöglichen, wobei eine Belastung der Umwelt weitgehend vermieden wird.

Die erfindungsgemäßen Langzeitdüngemittel werden nach üblichen Methoden auf die landwirtschaftlich oder gärtnerisch genutzten Flächen aufgebracht oder in das Substrat von Topf- oder Containerkulturen eingemischt oder aufgestreut.

Für eine optimale Wachstumsförderung der Pflanzen reicht es im allgemeinen aus, die erfindungsgemäßen Langzeitdüngemittel einmal pro Wachstumsperiode (bevorzugt zu deren Beginn) auf die Agrarfläche aufzubringen, weil der Nährstoffbedarfsverlauf der Pflanzen und der Freisetzungsverlauf der Düngemittelwirkstoffe übereinstimmen.

Die Erfindung wird nachstehend anhand von Beispielen näher erläutert.

### Beispiele

Zur Demonstration der guten und lang anhaltenden Wirkung der erfindungsgemäßen Zubereitungen wurden umfangreiche pflanzenbauliche Versuche durchgeführt. Es wurden Isobutylidendiharnstoff (IBDH), Acetylendiharnstoff (ADH), Ethylendiharnstoff (EDH), Crotonylidendihamstoff (CDU) und Triuret als alleinige Quellen von Langzeitstickstoff sowie Abmischungen mit IBDH im Verhältnis 67%/33% (Gefäßversuche) bzw. 50%/50% (Feldversuche) geprüft. Die Dünger enthielten in gleicher Menge die anderen Haupt- und Sekundämährstoffe sowie etwas leichtlöslichen Mineralstickstoff für eine Anfangswirkung.

Die Gefäßversuche wurden mit Weidelgras als Prüfkultur in Mitscherlichtöpfen angelegt, und das Gras wurde in regelmäßigen Abständen geschnitten, seine Trockenmasse wurde bestimmt, und es wurde auf seinen N-Gehalt analysiert. Über beide Größen errechnet sich die aufgenommene N-Menge pro Schnitt, die Addition ergibt die Stickstoffausnutzung. Die Ergebnisse sind in Tabelle 1 dargestellt. Aus Tabelle 1 wird deutlich, daß bei Einsatz von IBDH + ADH in Kombination die Stickstoffausnutzung der Düngung deutlich höher liegt, als wenn eine der beiden Stickstofflangzeitformen allein gegeben wird. Dabei beträgt die N-Ausnutzung 75 %, theoretisch errechnet sich aus den gegebenen Anteilen der jeweiligen Langzeitdüngerkomponenten eine Ausnutzung von nur 59%. Die Kombinationen von IBDH mit anderen Stickstoffformen, ohne ADH, zeigen diese Vorteile nicht.

**Tabelle 1:**

| Stickstoffausnutzung durch verschiedene Langzeitdüngerkombinationen (% Stickstoff in Blättern von Weidelgras in Relation zur insgesamt ausgebrachten Stickstoff-Menge; Mitscherlichgefäße; 5 I Boden; 2,4 g/Gefäß N; 9 Schnitte: 23 bis 207 Tage nach Düngung) | | | |
|---|---|---|---|
| **Langzeitdünger-Verbindung,** **Anteil** | | **N-Ausnutzung** **%** **gemessen** **(real)** | **N-Ausnutzung** **%** **Vorhersagewert** **(rechnerisch)** |
| 100 % | IBDH-N | 54 | - |
| 100 % | ADH-N | 70 | - |
| 67 % + 33 % | IBDH + ADH-N | 75 | 59 |
| 100 % | EDH-N | 68 | - |
| 67 % + 33 % | IBDH N+ EDH-N | 56 | 58 |
| 100 % | Triuret-N | 38 | - |
| 67 % + 33 % | IBDH N+ Triuret-N | 50 | 48 |
| 100 % | CDU-N | 58 | - |
| 67% + 33% | IBDHN + CDU-N | 54 | 55 |

Neben Gefäßversuchen wurde die Düngerkombination auch in Feldversuchen an Rasen geprüft, einem Haupteinsatzgebiet von langsamwirkenden Stickstoffformen. Beurteilungskriterien hierbei sind der farbliche Aspekt für die optische Qualität sowie die Wuchshöhe als Maß für die Regenerationskraft der Grasnarbe. Die Dünger wurden in einer Aufwandmenge von 20 g/m²N in einer Gabe gegeben. Die Ergebnisse sind in Tabellen 2 und 3 zusammengefasst. Die Zahlen in den Tabellen 2 und 3 lassen erkennen, dass sowohl beim Farbaspekt als auch bei der Wuchshöhe bei der Kombination von IBDH und ADH Werte erreicht wurden, die über der Erwartung lagen.

So lagen die realen Boniturnoten des Farbaspektes in Tabelle 2, außer an dem Termin 124 Tage nach der Düngung, deutlich über den errechneten Vorhersagewerten. Auch hier war zu erkennen, dass die synergistischen Wirkungen bei den anderen Kombinationen von Langzeitdüngerformen nicht auftraten. Ein vergleichbares Bild liefert Tabelle 3 bei den Wuchshöhen der Rasennarbe (Tab.3).

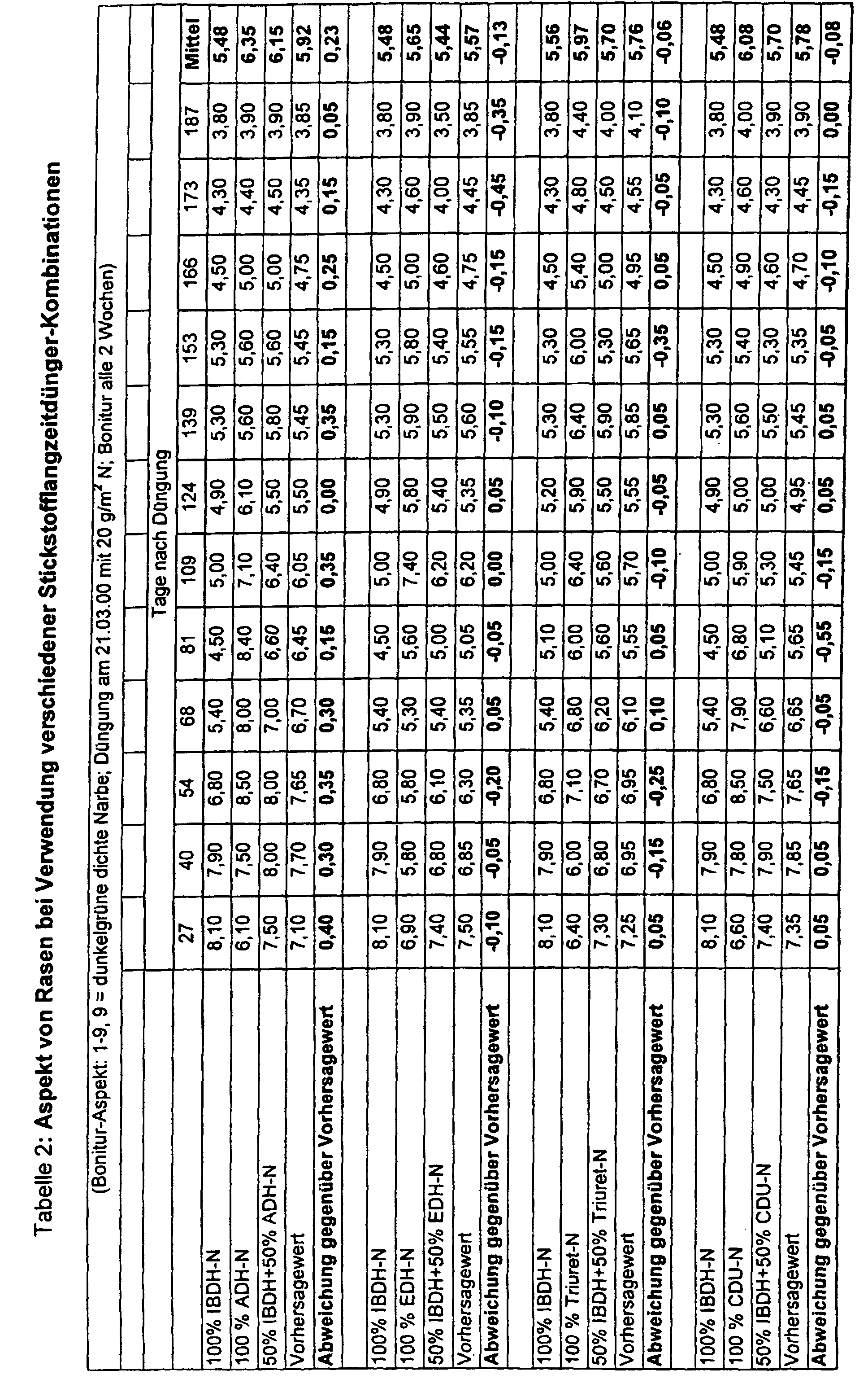

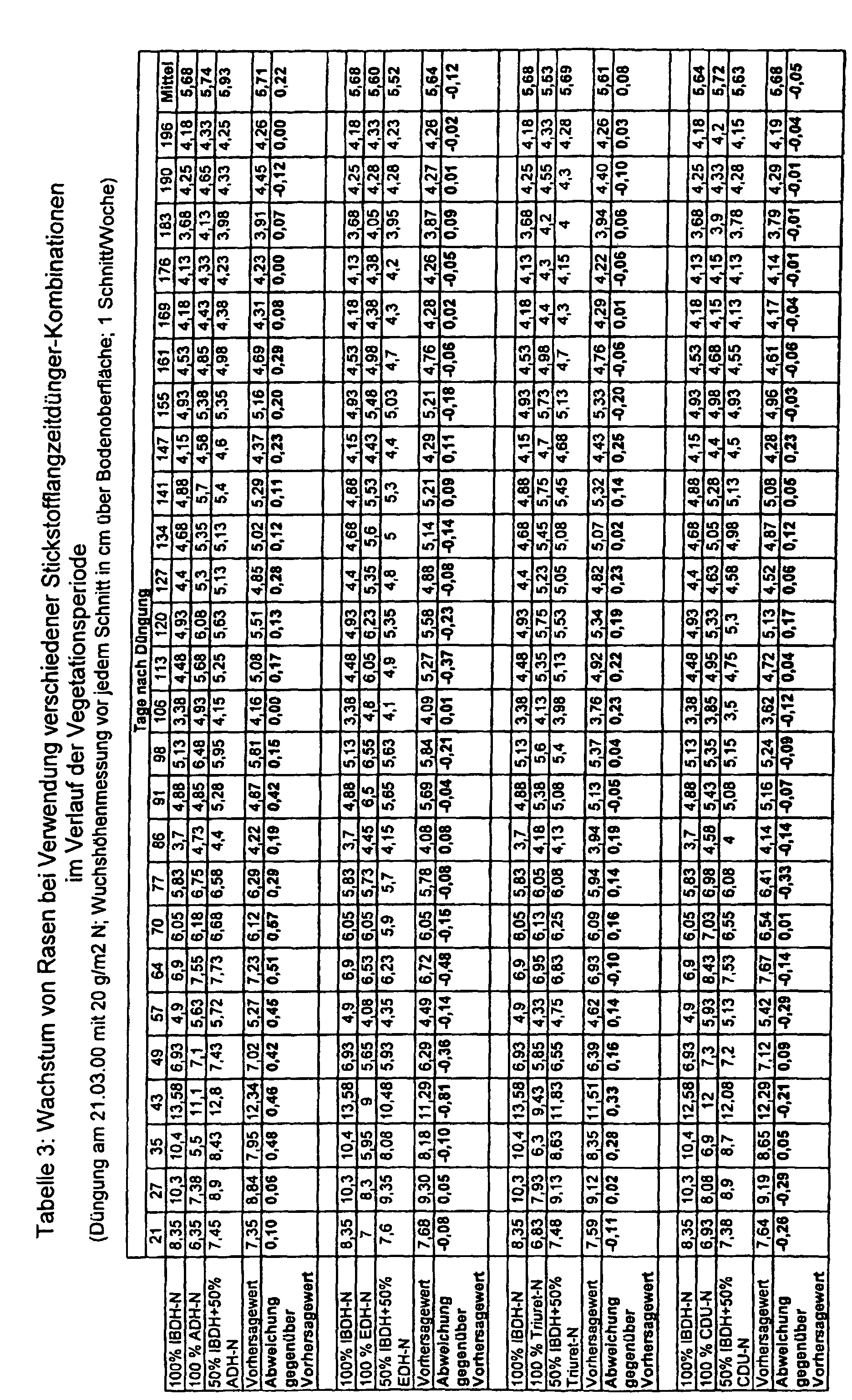

## Patentansprüche

1. Stickstoffhaltiges Langzeitdüngemittel, enthaltend ein Gemisch aus Acetylendiharnstoff und mindestens einem weiteren organischen stickstoffhaltigen Düngemittelausgewählt aus Methylenharnstoff, Isobutylidendiharnstoff, Crotonylidendiharnstoff, substituierten Triazonen, Triuret oder Gemischen davon.

2. Langzeitdüngemittel nach Anspruch 1, **dadurch gekennzeichnet, dass** das mindestens eine weitere organische stickstoffhaltige Düngemittel Isobutylidendiharnstoff ist.

3. Langzeitdüngemittel nach einem der Ansprüche 1 bis 2, **dadurch gekennzeichnet, dass** Acetylendiharnstoff und das mindestens eine weitere organische stickstoffhaltige Düngemittel in einem Gewichtsverhältnis von 1:9 bis 9:1 vorliegen.

4. Langzeitdüngemittel nach einem der Ansprüche 1 bis 3, **dadurch gekennzeichnet, dass** es zusätzlich Harnstoff oder Stickstoff, Kalium, Phosphor und/oder Magnesium in Form anorganischer Salze, oder Gemische davon enthält.

5. Langzeitdüngemittel nach einem der Ansprüche 1 bis 4, **dadurch gekennzeichnet, dass** es zusätzlich Sekundärnährstoffelemente, ausgewählt aus Ca, S und B, Spurenelemente, ausgewählt aus Fe, Mn, Cu, Zn, Mo oder Gemische davon in Form anorganischer Salze, Pflanzenschutzmittel, Wachstumsregulatoren, Nitrifikationsinhibitoren oder Gemische davon enthält.

6. Verfahren zur Herstellung von Langzeitdüngemitteln gemäß einem der Ansprüche 1 bis 5 durch Vermischen von Pulvern oder Granalien der Ausgangsverbindungen und gegebenenfalls nachfolgendes Granulieren.

7. Verwendung von Langzeitdüngemitteln gemäß einem der Ansprüche 1 bis 5 zur Düngung von gärtnerischen oder landwirtschaftlichen Kulturen.

## Claims

1. A long-term nitrogen-bearing fertiliser containing a mixture of acetylene diurea and at least one other organic nitrogen-bearing fertiliser selected from methylene urea, isobutylidene diurea, crotonylidene diurea, substituted triazones, triuret or mixtures thereof.

2. A long-term fertiliser according to claim 1 **characterised in that** the at least one further organic nitrogen-bearing fertiliser is isobutylidene diurea.

3. A long-term fertiliser according to one of claims 1 and 2 **characterised in that** acetylene diurea and the at least one further organic nitrogen-bearing fertiliser are present in a ratio by weight of 1:9 to 9:1.

4. A long-term fertiliser according to one of claims 1 to 3 **characterised in that** it additionally contains urea or nitrogen, potassium, phosphorus and/or magnesium in the form of inorganic salts, or mixtures thereof.

5. A long-term fertiliser according to one of claims 1 to 4 **characterised in that** it additionally contains secondary nutrients selected from Ca, S and B, trace elements selected from Fe, Mn, Cu, Zn, Mo or mixtures thereof in the form of inorganic salts, plant protection agents, growth regulators, nitrification inhibitors or mixtures thereof.

6. A process for the production of long-term fertilisers according to one of claims 1 to 5 by mixing powders or granules of the starting compounds and optionally subsequent granulation.

7. Use of long-term fertilisers according to one of claims 1 to 5 for fertilising horticultural or agricultural cultures.

## Revendications

1. Engrais azoté à action lente, comportant un mélange d'acétylènediurée et au moins un autre engrais organique azoté choisi parmi la méthylèneurée, l'isobutylidènediurée, la crotonolydènediurée, les triazones substituées, le triuret ou leurs mélanges.

2. Engrais à action lente suivant la revendication 1, **caractérisé en ce que** au moins un autre engrais organique azoté et l'isobutylidènediurée.

3. Engrais à action lente suivant l'une des revendications 1 à 2, **caractérisé en ce que** l'acétylènediurée est le au moins un autre engrais organique azoté sont présents en un rapport en poids de 1:9 à 9:1.

4. Engrais à action lente suivant l'une des revendications 1 à 3, **caractérisé en ce qu'**il comprend, en outre, de l'urée ou de l'azote, du potassium, du phosphore et/ou du magnésium, sous la forme de sels minéraux ou de leurs mélanges.

5. Engrais à action lente suivant l'une des revendications 1 à 4, **caractérisé en ce qu'**il comprend, en outre, des éléments nutritifs secondaires choisis parmi Ca, S et B, des éléments sous forme de traces choisis parmi Fe, Mn, Cu, Zn, Mo ou leurs mélanges sous forme de sels minéraux, des produits phytosanitaires, des régulateurs de croissance, des inhibiteurs de nitrification ou leurs mélanges.

6. Procédé de production d'engrais à action lente suivant l'une des revendications 1 à 5, par mélange de poudres ou de granulés des produits de départ, suivi éventuellement d'une granulation.

7. Utilisation d'engrais à action lente suivant l'une des revendications 1 à 5, pour fumer des cultures de jardins ou agricoles.
